# EUROPÄISCHE PATENTSCHRIFT

(11) **EP 1 318 337 B1**
(45) Veröffentlichungstag und Bekanntmachung des Hinweises auf die Patenterteilung: **12.10.2005**
(21) Anmeldenummer: 02025836.4
(22) Anmeldetag: 19.11.2002
(51) Int. Cl.: F16K 5/04, F16K 11/085

(54) **Drehschieber mit Dichtung für Flüssigkeits-Kühlsysteme**
Cock with sealing for a fluid cooling system
Robinet tournant avec joint d'étanchéité pour un système de refoidissement à fluide

(30) Priorität: 06.12.2001 DE 10159963
(43) Veröffentlichungstag der Anmeldung: 11.06.2003
(73) Patentinhaber: Carl Freudenberg KG, 69469 Weinheim (DE)
(72) Erfinder: Clemens, Markus, 64385 Reichelsheim (DE); Ziegler, Günter, 68259 Mannheim (DE); Raidt, Andreas, 74321 Bietigheim (DE)

(56) Entgegenhaltungen:
- EP-B- 0 639 736
- FR-A- 1 171 596
- GB-A- 939 999
- US-A- 2 605 994
- US-A- 2 606 740

## Beschreibung

Die Erfindung betrifft ein Regelventil, umfassend ein Gehäuse mit einer Ventilkammer, wobei die Ventilkammer zumindest einen Zulauf und zumindest einen Ablauf aufweist, wobei der Zulauf und/oder der Ablauf durch einen um eine Achse drehbaren und in der Ventilkammer angeordneten Drehschieber bedarfsweise zumindest teilweise verschließbar sind, wobei der Zulauf und/oder der Ablauf auf der dem Drehschieber zugewandten Seite des Gehäuses von einer Dichtung umschlossen ist, wobei die Dichtung unter elastischer Vorspannung dichtend an die dem Gehäuse zugewandte Oberfläche des Drehschiebers anlegbar ist und die Dichtung von der dem Drehschieber abgewandten Seite des Gehäuses in das Gehäuse montierbar ist. Die Erfindung betrifft des Weiteren eine Dichtung zur Abdichtung der außenumfangsseitigen Oberfläche eines Drehschiebers, der um eine Achse drehbar in einer Ventilkammer eines Gehäuses angeordnet ist, wobei die Dichtung einen Stützkörper aus zähhartem Werkstoff und einen Dichtkörper umfasst, wobei der Dichtkörper auf der im Montagezustand der Dichtung der Oberfläche des Drehschiebers zugewandten Seite eine Dichtlippe aufweist und wobei der Stützkörper zumindest einen ersten Positionierungsvorsprung aufweist, der mit einem Widerlager des Gehäuses in Eingriff bringbar ist. Schließlich betrifft die Erfindung ein Flüssigkeits-Kühlsystem einer Verbrennungskraftmaschine, umfassend ein Regelventil und/oder eine Dichtung.

### Stand der Technik

Ein derartiges Regelventil mit einer Dichtung für ein Flüssigkeits-Kühlsystem ist beispielsweise aus der EP 0 639 736 B1 bekannt. Das vorbekannte Regelventil umfasst eine Dichtung, die als ringförmige Formteildichtung aus PTFE besteht und auf der dem Drehschieber abgewandten Seite in axialer Richtung elastisch nachgiebig auf einem Federelement abgestützt ist. Das Federelement ist durch einen O-Ring aus elastomerem Werkstoff gebildet.

Aus der FR 1 171 596 A ist ein Regelventil mit den Merkmalen des Oberbegriffs des Patentanspruchs 1 bekannt. Die dort offenbarte Dichtung weist eine einem Stempel zugewandte ebene Oberfläche auf, die am Stempel anliegt. Der Stempel ist mit einem Schraubgewinde versehen und wird durch eine Mutter fixiert.

### Darstellung der Erfindung

Der Erfindung liegt nunmehr die Aufgabe zugrunde, ein Ventil-Dichtungs-System zu realisieren, bei dem nach einfachen Montageschritten ein wartungsarmer und flüssigkeitsdichter Betrieb gewährleistet ist.

Die vorliegende Erfindung löst die zuvor genannte Erfindung durch die Merkmale des Patentanspruchs 1. Danach ist ein Regelventil derart ausgebildet, dass das Gehäuse zumindest ein Widerlager aufweist, welches mit einem ersten, der Dichtung zugeordneten Positionierungsvorsprung zu deren verdrehsicheren und in axialer Richtung angschlagsdefinierten Aufnahme in Eingriff bringbar ist.

Bei diesem Regelventil ist die Dichtung von der dem Drehschieber abgewandten Seite des Gehäuses in das Gehäuse montierbar. Hierbei ist von Vorteil, dass das Regelventil insgesamt sehr einfach montierbar ist und dass die Dichtung bedarfsweise ohne großen Reparaturaufwand austauschbar ist. Die Montage der Dichtung erfolgt derart, dass die Dichtung von der dem Drehschieber abgewandten Seite des Gehäuses in die dafür vorgesehene Aufnahmebohrung des Gehäuses eingepresst wird. Dabei können das Gehäuse und der in der Ventilkammer des Gehäuses angeordnete Drehschieber bereits miteinander montiert sein und dadurch eine vormontierbare Einheit bilden. Die Dichtung wird von außen axial in Richtung des Drehschiebers so lange in die entsprechende Aufnahmebohrung des Gehäuses eingeschoben, bis sie die abzudichtende, außenumfangsseitige Oberfläche des Drehschiebers unter elastischer Vorspannung dichtend berührt.

Der Drehschieber ist bevorzugt hohlzylinderförmig ausgebildet und konzentrisch innerhalb der im Wesentlichen zylinderförmigen Kammer angeordnet. Die Herstellung rotationssymmetrischer Bauteile und/oder rotationssymmetrischer Ausnehmungen ist in fertigungstechnischer und wirtschaftlicher Hinsicht einfach und kostengünstig möglich. Durch den um die Achse drehbaren Drehschieber bieten sich derartige Formen außerdem an. Der im Wesentlichen hohlzylinderförmige Drehschieber kann an der die zylinderförmige Ventilkammer begrenzenden Wandung des Gehäuses einfach und exakt um die Achse drehbar gelagert werden.

Das Gehäuse kann, ebenso wie der Drehschieber, im Wesentlichen hohlzylinderförmig ausgebildet sein und auf seiner der Ventilkammer abgewandten Seite zumindest einen **zweiten** Positionierungsvorsprung aufweisen. Ein solcher **zweiter** Positionierungsvorsprung kann vorgesehen sein, um eine exakte Positionierung des Gehäuses zu dem das Gehäuse außenseitig umschließenden Maschinenelement, beispielsweise einem Motorblock einer Verbrennungskraftmaschine, sicherzustellen. Eine solche lagerichtige Zuordnung ist von entscheidender Wichtigkeit, da sowohl der Zulauf als auch der Ablauf mit jeweils anschließenden Leitungen, beispielsweise im Motorblock der Verbrennungskraftmaschine, fluchten müssen.

Der **zweite** Positionierungsvorsprung kann einstückig und materialeinheitlich mit dem Gehäuse ausgebildet sein. Die einstückige und materialeinheitliche Ausgestaltung des Positionierungsvorsprungs mit dem Gehäuse kann besonders einfach dann erreicht werden, wenn das Gehäuse beispielsweise als Spritzgußteil ausgebildet ist. Im Gegensatz zu separat vom Gehäuse erzeugten **zweiten** Positionierungsvorsprüngen, die im Anschluss an ihre Herstellung mit dem bereits fertigen Gehäuse verbunden werden, beispielsweise durch eine Verschraubung, Verklebung oder Verschweißung, stellt die einstückige und materialeinheitliche Ausgestaltung des **zweiten** Positionierungsvorsprungs mit dem Gehäuse eine einfache Herstell- und Montierbarkeit des Regelventils sicher. Außerdem werden durch Fügevorgänge bedingte Toleranzen durch die einstückige Ausgestaltung vermieden. Sollen, bei z.B. zweistückigen Ausgestaltungen von Gehäuse und Positionierungsvorsprüngen, die Toleranzen besonders klein gehalten werden, was zur exakten Positionierung des Gehäuses im weiteren Maschinenelement von entscheidender Wichtigkeit ist, wäre ein sehr hoher Fertigungsaufwand erforderlich, der in wirtschaftlicher Hinsicht oft nicht akzeptabel ist.

Bevorzugt gelangt nur ein **zweiter** zur Anwendung. Dadurch werden nachteilige Doppel-Passungen bei der Montage des Gehäuses im das Gehäuse umschließenden Maschinenelement vermieden. Für manche Anwendungsfälle können jedoch zumindest zwei gleichmäßig in Umfangsrichtung verteilte, **zweite** Positionierungsvorsprünge zur Anwendung gelangen. Hierdurch lässt sich beispielsweise die Einpresstiefe und die Justage des Gehäuses in dem Maschinenelement exakt bestimmen, was für die Gesamtfunktion von besonderer Bedeutung ist. Wenn mehr als zwei Positionierungsvorsprünge in Umfangsrichtung verteilt sind, resultiert neben einer zusätzlichen Kippsicherung des Gehäuses in dem Maschinenelement eine bessere Verteilung der von dem Gehäuse übertragenen und auf dieses ausgeübte Anpresskräfte in Umfangsrichtung. Das Gehäuse kann dadurch ohne Funktionsbeeinträchtigung vielfach leichter gestaltet werden. Zweckmäßig sind auch diese Positionierungsvorsprünge gleichmäßig in Umfangsrichtung des Gehäuses verteilt an diesem angebracht.

Die Dichtung umfasst eine Dichtlippe, die in sich geschlossen ausgebildet ist und herstellungsbedingt eine an die abzudichtende Oberfläche des Drehschiebers angepasste Form aufweist. Von entscheidendem Vorteil bei einer derartigen Dichtung ist, dass die Dichtlippe herstellungsbedingt eine an die abzudichtende Oberfläche des Drehschiebers angepasste Form aufweist und nicht beispielsweise aus einem handelsüblichen O-Ring aus elastomerem Werkstoff besteht, der herstellungsbedingt eben und kreisringförmig ausgebildet ist und erst im Anschluss an seine Montage in eine an die Form des Drehschiebers angepasste Aufnahme des Gehäuses eine elastische Verformung erfährt, die dann ebenfalls an die abzudichtende Oberfläche des Drehschiebers angepasst ist. Durch die montagebedingte elastische Verformung und Anpassung an die abzudichtende Oberfläche des Drehschiebers erfolgt eine unerwünschte Verdrehung des O-Rings und dadurch eine unterschiedliche Anpresskraft der Dichtung in Umfangsrichtung entlang der Dichtfläche. Außerdem wirkt die Rückstellkraft der elastisch verformten Dichtung stets der Haltekraft der Verbindung zwischen Dichtung und Gehäuse entgegen, so dass es während einer langen Gebrauchsdauer und/oder bei erhöhter Temperatureinwirkung zu unerwünschten Ablösungen der Dichtung aus ihrem Einbauraum kommen kann.

Die Dichtlippe kann mittels einem Dichtkörper aus elastomerem Werkstoff mit einem Stützkörper aus zähhartem Werkstoff verbunden sein. Eine solche Ausgestaltung ergibt sich dann, wenn beispielsweise die Dichtlippe und der Dichtkörper aus unterschiedlichen Materialien bestehen. Bevorzugt gelangt für die Anwendung in einem Regelventil eine Dichtlippe aus PTFE zur Anwendung, da eine derartige Dichtlippe während der gesamten Gebrauchsdauer nur einen vernachlässigbar geringen Verschleiß aufweist und dadurch gute Gebrauchseigenschaften während der gesamten Gebrauchsdauer. Durch die aus PTFE bestehende Dichtlippe wird eine ausgezeichnete, leichtgängige Relativbeweglichkeit des Drehschiebers gegenüber dem Gehäuse bewirkt, auch dann, wenn die axiale Anpressung der Dichtung an die abzudichtende Oberfläche des Drehschiebers vergleichsweise groß ist, um eine gute Abdichtung zu erreichen.

Die Dichtlippe kann durch eine folienartig dünne Beschichtung des Dichtkörpers auf der dem Drehschieber zugewandten Seite gebildet sein. Die folienartig dünne Beschichtung wird beispielsweise auf den aus einem elastomeren Werkstoff bestehenden Dichtkörper aufvulkanisiert.

Nach einer anderen Ausgestaltung können die Dichtlippe und der Dichtkörper einstückig ineinander übergehend und materialeinheitlich ausgebildet sein und aus einem elastomeren Werkstoff bestehen. Eine solche Dichtung ist besonders kostengünstig herstellbar.

Die lagerichtige Positionierung der Dichtung, bezogen auf das Gehäuse und den Drehschieber, ist von entscheidender Wichtigkeit. Eine derartige Positionierung ist **dadurch** möglich, **dass** der Stützkörper zumindest einen **ersten** Positionierungsvorsprung aufweist, der mit einem Widerlager des Gehäuses in Eingriff bringbar ist. Das Widerlager kann durch die Begrenzung einer im Wesentlichen kongruent zum **ersten** Positionierungsvorsprung ausgebildeten Ausnehmung im Gehäuse gebildet sein, so dass der **erste** Positionierungsvorsprung mit dem Widerlager kraft- und/oder formschlüssig in Eingriff bringbar ist.

Da die Dichtung sowohl in Umfangsrichtung als auch in axialer Richtung relativ zu Gehäuse und/oder Drehschieber positioniert sein muß, ist es besonders vorteilhaft, **dass** der **erste** Positionierungsvorsprung sowohl als Verdrehsicherung als auch als Axialanschlag zur Positionierung der Dichtung im Gehäuse ausgebildet ist. Der Positionierungsvorsprung hat daher in dem zuvor beschriebenen Fall eine Doppelfunktion.

Generell besteht jedoch auch die Möglichkeit, mehrere **erste** Positionierungsvorsprünge vorzusehen, von denen beispielsweise zumindest einer als Verdrehsicherung und zumindest einer als Axialanschlag ausgebildet ist. Hinsichtlich einer einfachen Herstellbarkeit und Handhabung der Dichtung wäre eine derartige Ausgestaltung jedoch weniger vorteilhaft. Im Rahmen der vorliegenden Erfindung wird zumindest einem **ersten** Positionierungsvorsprung der Vorzug gegeben, der als Verdrehsicherung und als Axialanschlag ausgebildet ist.

Die Dichtung kann außenumfangsseitig einen statisch beanspruchten Dichtwulst aufweisen, der unter elastischer Vorspannung dichtend an die den Zulauf und/oder den Ablauf umfangsseitig begrenzende Wandung des Gehäuses anlegbar ist. Der Dichtwulst bewirkt die Abdichtung der Dichtung in ihrem Einbauraum.

Die Dichtlippe kann, im Längsschnitt der Dichtung betrachtet, konisch in Richtung des Raums mit dem relativ höheren Druck aufgeweitet sein. Durch eine derartige Ausgestaltung ergibt sich durch dynamische Druckänderungen an der Dichtlippe eine Veränderung der Anpresskraft der Dichtlippe an der abzudichtenden Oberfläche des Drehschiebers. Erhöht sich beispielsweise der Druck radial außenseitig der Dichtlippe, wird die Dichtlippe mit erhöhter Anpresskraft an die Oberfläche des Drehschiebers angepresst. Durch die an die jeweiligen Druckverhältnisse angepasste Anpresskraft der Dichtlippe an die abzudichtende Oberfläche des Drehschiebers ist der abrasive Verschleiß an der Dichtlippe auf ein Minimum begrenzt; eine hohe Anpressung der Dichtlippe, wenn dies aus technischer Sicht gar nicht nötig ist, wird dadurch vermieden.

Die eingangs genannte Aufgabe wird des Weiteren durch eine Dichtung mit den Merkmalen des Patentanspruchs 13 gelöst.

Die genannte Aufgabe wird schließlich durch ein Flüssigkeitskühlsystem einer Verbrennungskraftmaschine mit den Merkmalen des Patentanspruchs 14 gelöst.

Besonders vorteilhaft ist die Verwendung des zuvor beschriebenen Regelventils und/oder der zuvor beschriebenen Dichtung, wenn sie in einem Flüssigkeits-Kühlsystem einer Verbrennungskraftmaschine zur Anwendung gelangen.

### Kurzbeschreibung der Zeichnung

Ein Ausführungsbeispiel des erfindungsgemäßen Regelventils und der darin zur Anwendung gelangenden Dichtung wird nachfolgend anhand der Figuren 1 bis 6 näher erläutert.

Diese zeigen jeweils in schematischer Darstellung:
- Fig. 1: ein Ausführungsbeispiel eines Regelventils,
- Fig. 2: einen Längsschnitt durch die im Regelventil aus Fig. 1 zur Anwendung gelangenden Dichtung entlang der Linie A-A aus Fig. 4,
- Fig. 3: einen Längsschnitt durch die Dichtung aus Fig. 4 entlang der Linie B- B,
- Fig. 4: eine Ansicht der Dichtung aus Fig. 1 von rechts,
- Fig. 5: eine erste perspektivische Darstellung der Dichtung gemäß den Figuren 2 bis 4 und
- Fig. 6: eine zweite perspektivische Darstellung der Dichtung gemäß den Figuren 2 bis 4, die hauptsächlich die dem Drehschieber abgewandte Seite der Dichtung zeigt.

### Ausführung der Erfindung

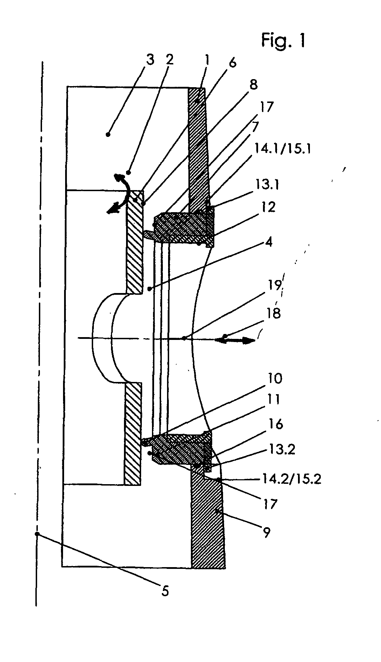

In Fig. 1 ist ein Regelventil gezeigt, das ein im Wesentlichen hohlzylinderförmiges Gehäuse 1 umfasst und eine im Wesentlichen zylinderförmige Ventilkammer 2, die vom Gehäuse 1 umschlossen ist. In die Ventilkammer 2 mündet in diesem Ausführungsbeispiel ein Zulauf 3. Der Ablauf aus der Ventilkammer 2 ist mit dem Bezugszeichen 4 versehen. Innerhalb der Ventilkammer 2 ist ein um die Achse 5 drehbarer Drehschieber 6 angeordnet, durch den der Ablauf 4 bedarfsweise verschließbar ist. Der Ablauf 4 ist auf der dem Drehschieber 6 zugewandten Seite des Gehäuses 1 von einer Dichtung 7 umschlossen, wobei die Dichtung 7 die dem Gehäuse 1 zugewandte Oberfläche 8 des Drehschiebers 6 mit einer Dichtlippe 10 unter elastischer Vorspannung dichtend berührt.

Die Dichtung 7 ist von der dem Drehschieber 6 abgewandten Seite des Gehäuses 1 in das Gehäuse 1 montierbar, wobei die Montage- und Demontagerichtung der Dichtung, relativ zum Gehäuse 1, durch das Bezugszeichen 18 gekennzeichnet ist.

Vor der Montage der Dichtung 7 bilden das Gehäuse 1 und der Drehschieber 6 bereits eine vormontierbare Einheit, wobei die Dichtung 7 von außen in das Gehäuse 1 montiert ist. Die Dichtung 7 wird axial in Richtung des Gehäuses 1 so lange verschoben, bis die Dichtlippe 10 die Oberfläche 8 des Drehschiebers 6 mit der vorherbestimmten axialen elastischen Anpressung dichtend berührt.

Der Drehschieber 6 ist konzentrisch innerhalb der Ventilkammer 2 angeordnet und beispielsweise durch einen hier nicht dargestellten Elektromotor um die Achse 5 drehbar.

Zur statischen Abdichtung innerhalb des Gehäuses 1 ist die Dichtung 7 außenumfangsseitig mit einem statisch beanspruchten Dichtwulst 16 versehen, der einen einstückigen und materialeinheitlichen Bestandteil des Dichtkörpers 11 bildet und aus elastomerem Werkstoff besteht. Der Dichtwulst 16 berührt die den Ablauf 4 begrenzende Wandung des Gehäuses 1 dichtend. Um das Gehäuse 1 lagerichtig in einer kongruent gestalteten Ausnehmung eines hier nicht dargestellten Maschinenelements, beispielsweise dem Motorblock einer Verbrennungskraftmaschine, positionieren zu können, weist das Gehäuse 1 einen **zweiten** Positionierungsvorsprung 9 auf, der die Gestalt einer sich in axialer Richtung erstreckenden Rippe aufweist. Durch den **zweiten** Positionierungsvorsprung 9 ist eine unerwünschte Verdrehung des Gehäuses 1 bezogen auf das das Gehäuse 1 umschließende Maschinenelement während der Montage/während der bestimmungsgemäßen Verwendung ausgeschlossen.

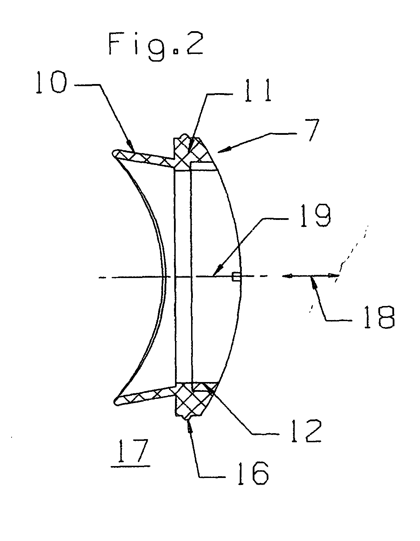

In den Figuren 2 bis 6 ist ein Ausführungsbeispiel der Dichtung 7 gezeigt, wie sie im Regelventil gemäß Fig. 1 zur Anwendung gelangt. Die Dichtung 7 weist eine Dichtlippe 10 auf, die herstellungsbedingt eine an die abzudichtende Oberfläche 8 des Drehschiebers 6 angepasste Form aufweist und in sich geschlossen, ringförmig ausgebildet ist. Im hier gezeigten Ausführungsbeispiel umfasst die Dichtung 7 einen Stützkörper 12 aus einem zähharten Werkstoff, beispielsweise aus einem metallischen Werkstoff, der mit dem Dichtkörper 11 aus elastomerem Werkstoff durch Vulkanisation verbunden ist. Die Dichtlippe 10 ist in den hier gezeigten Ausführungsbeispielen kein einstückiger Bestandteil des Dichtkörpers 11, sondern besteht aus einer folienartig dünnen PTFE-Beschichtung und ist beispielsweise ebenfalls durch Vulkanisation mit dem elastomeren Werkstoff des Dichtkörpers 11 verbunden.

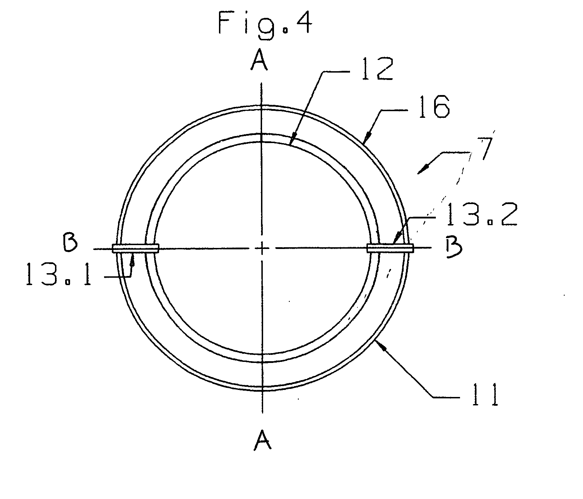

In Fig. 2 ist ein Längsschnitt der Dichtung 7 aus Fig. 4 entlang der Linie A-A gezeigt. Der Dichtwulst 16 umschließt den Außenumfang des Dichtkörpers 11 und die Dichtlippe 10 ist, im Längsschnitt der Dichtung 7 betrachtet, konisch in Richtung des Raums 17 mit dem relativ höheren Druck aufgeweitet. Die Aufweitung in radialer Richtung, bezogen auf die Symmetrieachse 19, beträgt 5 bis 15, bevorzugt 10°.

Die Dichtlippe 10 weist einen Krümmungsradius auf, der dem Krümmungsradius der abzudichtenden Oberfläche 8 des Drehschiebers 6 entspricht.

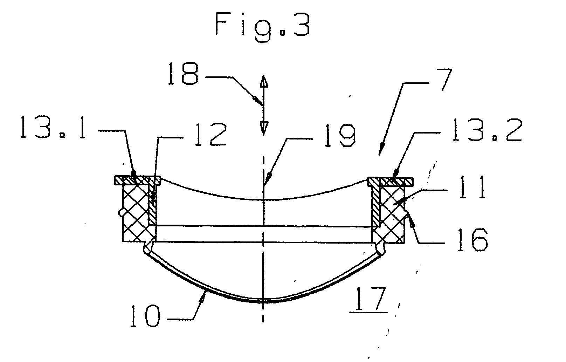

In Fig. 3 ist ein Längsschnitt durch die Dichtung 7 aus Fig. 4 gezeigt, entlang der Linie B-B. Der Dichtkörper 11 ist mit dem Stützkörper 12, der in diesem Ausführungsbeispiel aus einem metallischen Werkstoff besteht, durch Vulkanisation verbunden, wobei der Stützkörper mit zwei **ersten** Positionierungsvorsprüngen 13.1, 13.2 verbunden ist. Die beiden Positionierungsvorsprünge 13.1, 13.2 können einstückig ineinander übergehend und materialeinheitlich mit dem Stützkörper 12 ausgebildet oder, nach einer anderen Ausgestaltung, bezogen auf den Stützkörper 12, separat erzeugt und später mit diesem verbunden sein. Die beiden **ersten** Positionierungsvorsprünge 13.1, 13.2 haben in diesem Ausführungsbeispiel eine Doppelfunktion. Die beiden **ersten** Positionierungsvorsprünge 13.1, 13.2 sind sowohl als Verdrehsicherung als auch als Axialanschlag zur Positionierung der Dichtung 7 im Gehäuse 1 ausgebildet.

Durch die herstellungsbedingt an die abzudichtende Oberfläche 8 des Drehschiebers 6 angepasste Form der Dichtlippe 10 ist diese entlang ihrer gesamten umfangsseitigen Erstreckung mit gleicher elastischer Vorspannung axial an die Oberfläche 8 des Drehschiebers 6 angepresst.

In Fig. 4 ist eine Ansicht der Dichtung 7 aus Fig. 1 von rechts gezeigt sowie der Schnittverlauf A-A aus Fig. 2 und B-B aus Fig. 3.

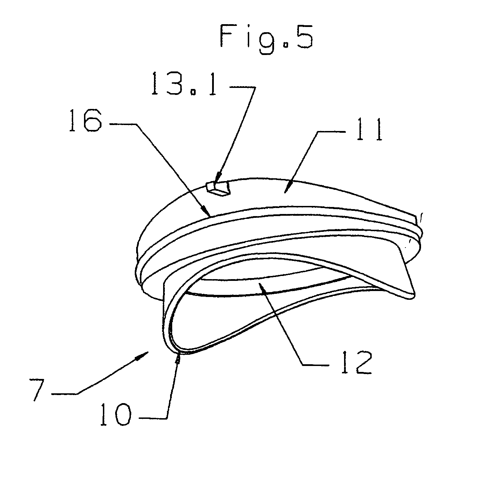

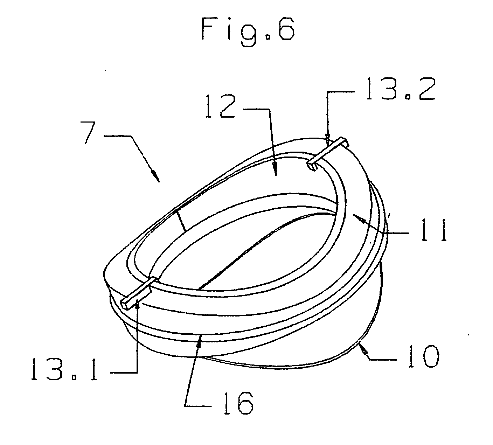

In den Figuren 5 und 6 ist die in den Figuren 2 bis 4 dargestellte Dichtung 7 in unterschiedlichen perspektivischen Ansichten gezeigt.

In Fig. 5 ist die herstellungsbedingt an die abzudichtende Oberfläche 8 des Drehschiebers 6 angepasste Form der Dichtlippe 10 gezeigt, die aus PTFE besteht und als folienartig dünne Beschichtung des Dichtkörpers 11 auf der dem Drehschieber 6 zugewandten Seite ausgebildet ist. Einer der beiden **ersten** Positionierungsvorsprünge 13.1, 13.2 steht in radialer Richtung nach außen vom Dichtkörper 11 vor und gelangt mit dem Widerlager 14.1, 14.2, das in Fig. 1 schematisch dargestellt ist, während seiner Montage in das Gehäuse 1 in Eingriff. Die Widerlager 14.1, 14.2 sind jeweils durch eine im Wesentlichen kongruent zu den ersten Positionierungsvorsprüngen 13.1, 13.2 ausgebildete Ausnehmung 15.1, 15.2 des Gehäuses 1 gebildet.

In Fig. 6 ist die dem Drehschieber 6 axial abgewandte Seite der Dichtung 7 gezeigt, die im Wesentlichen eine dem Mantel des Gehäuses 1 angepasste Form aufweist. Die **ersten** Positionierungsvorsprünge 13.1, 13.2 sind gleichmäßig in Umfangsrichtung der Dichtung 7 verteilt.

Bevorzugt gelangt das in Fig. 1 gezeigte Regelventil und/oder die in den Figuren 1 bis 6 gezeigte Dichtung in Flüssigkeits-Kühlsystemen von Verbrennungskraftmaschinen zur Anwendung.

Bei derartigen Flüssigkeits-Kühlsystemen von Verbrennungskraftmaschinen ist die Länge verschiedener Kühlmittel-Kreisläufe schaltbar. Während der Aufwärmphase der Verbrennungskraftmaschine kann der Kühlmittel-Kreislauf beispielsweise vollständig unterbrochen sein, oder nur der kleine Kühlmittel-Kreislauf ist vom Kühlmittel durchströmbar.

## Patentansprüche

1. Regelventil, umfassend ein Gehäuse (1) mit einer Ventilkammer (2), wobei die Ventilkammer (2) zumindest einen Zulauf (3) und zumindest einen Ablauf (4) aufweist, wobei der Zulauf (3) und/oder der Ablauf (4) durch einen, um eine Achse (5) drehbaren und in der Ventilkammer (2) angeordneten Drehschieber (6) bedarfsweise zumindest teilweise verschließbar sind, wobei der Zulauf (3) und/oder der Ablauf (4) auf der dem Drehschieber (6) zugewandten Seite des Gehäuses (1) von einer Dichtung (7) umschlossen ist, wobei die Dichtung (7) unter elastischer Vorspannung dichtend an die dem Gehäuse (1) zugewandte Oberfläche (8) des Drehschiebers (6) anlegbar ist und die Dichtung (7) von der dem Drehschieber (6) abgewandten Seite des Gehäuses (1) in das Gehäuse (1) montierbar ist, **dadurch gekennzeichnet, dass** das Gehäuse (1) zumindest ein Widerlager (14) aufweist, welches mit einem **ersten**, der Dichtung (7) zugeordneten Positionierungsvorsprung (13) zu deren verdrehsicheren und **in axialer Richtung** anschlagsdefinierten Aufnahme in Eingriff bringbar ist.

2. Regelventil nach Anspruch 1, **dadurch gekennzeichnet, dass** der Drehschieber (6) hohlzylinderförmig ausgebildet und konzentrisch innerhalb der im Wesentlichen zylinderförmigen Ventilkammer (2) angeordnet ist.

3. Regelventil nach einem der Ansprüche 1 oder 2, **dadurch gekennzeichnet, dass** das Gehäuse (1) hohlzylinderförmig ausgebildet ist und auf seiner der Ventilkammer (2) abgewandten Seite zumindest einen **zweiten** Positionierungsvorsprung (9) aufweist.

4. Regelventil nach Anspruch 3, **dadurch gekennzeichnet, dass** der **zweite** Positionierungsvorsprung (9) einstückig und materialeinheitlich mit dem Gehäuse (1) ausgebildet ist.

5. Regelventil nach einem der Ansprüche 1 bis 4, **dadurch gekennzeichnet, dass** die Dichtung (7) eine Dichtlippe (10) umfasst, die in sich geschlossen ausgebildet ist und herstellungsbedingt eine an die abzudichtende Oberfläche (8) des Drehschiebers (6) angepasste Form aufweist.

6. Regelventil nach Anspruch 5, **dadurch gekennzeichnet, dass** die Dichtlippe (10) mittels einem Dichtkörper (11) aus elastomerem Werkstoff mit einem Stützkörper (12) aus zähhartem Werkstoff verbunden ist.

7. Regelventil nach einem der Ansprüche 5 oder 6, **dadurch gekennzeichnet, dass** die Dichtlippe (10) aus PTFE besteht.

8. Regelventil nach einem der Ansprüche 5 bis 7, **dadurch gekennzeichnet, dass** die Dichtlippe (10) durch eine folienartig dünne Beschichtung des Dichtkörpers (11) auf der dem Drehschieber (6) zugewandten Seite gebildet ist.

9. Regelventil nach Anspruch 6, **dadurch gekennzeichnet, dass** der Stützkörper zumindest den ersten Positionierungsvorsprung (13) aufweist.

10. Regelventil nach Anspruch 9, **dadurch gekennzeichnet, dass** das Widerlager (14) durch die Begrenzung einer im Wesentlichen kongruent zum **ersten** Positionierungsvorsprung (13) ausgebildeten Ausnehmung (15) des Gehäuses (1) gebildet ist.

11. Regelventil nach einem der Ansprüche 1 bis 10, **dadurch gekennzeichnet, dass** die Dichtung (7) außenumfangsseitig einen statisch beanspruchten Dichtwulst (16) aufweist, der unter elastischer Vorspannung dichtend an die den Zulauf (3) und/oder den Ablauf (4) umfangsseitig begrenzende Wandung des Gehäuses (1) anlegbar ist.

12. Regelventil nach einem der Ansprüche 5 bis 11, **dadurch gekennzeichnet, dass** die Dichtlippe (10), im Längsschnitt der Dichtung (7) betrachtet, konisch in Richtung des Raums (17) mit dem relativ höheren Druck aufgeweitet ist.

13. Dichtung (7) zur Abdichtung der außenumfangsseitigen Oberfläche (8) eines Drehschiebers (6), der um eine Achse (5) drehbar in einer Ventilkammer (2) eines Gehäuses (1) angeordnet ist, wobei die Dichtung (7) einen Stützkörper (12) aus zähhartem Werkstoff und einen Dichtkörper (11) umfasst, wobei der Dichtkörper (11) auf der im **Montagezustand der Dichtung** der Oberfläche des Drehschiebers (6) zugewandten Seite eine Dichtlippe (10) aufweist und wobei der Stützkörper (12) zumindest einen **ersten** Positionierungsvorsprung (13) aufweist, der mit einem Widerlager (14) des Gehäuses (1) in Eingriff bringbar ist, **dadurch gekennzeichnet, dass** der **erste** Positionierungsvorsprung (13) als Verdrehsicherung **und** als Axialanschlag zur Positionierung der Dichtung (7) im Gehäuse (1) ausgebildet ist.

14. Flüssigkeits-Kühlsystem einer Verbrennungskraftmaschine, umfassend ein Regelventil gemäß einem der Ansprüche 1 bis 12 und/oder eine Dichtung (7), gemäß Anspruch 13.

## Claims

1. Regulating valve, comprising a housing (1) with a valve chamber (2), the valve chamber (2) having at least one inflow (3) and at least one outflow (4), the inflow (3) and/or the outflow (4) being at least partially closable, as required, by means of a rotary slide (6) rotatable about an axis (5) and arranged in the valve chamber (2), the inflow (3) and/or the outflow (4) being surrounded by a seal (7) on that side of the housing (1) which faces the rotary slide (6), the seal (7) being capable of being laid sealingly under elastic prestress against that surface (8) of the rotary slide (6) which faces the housing (1), and the seal (7) being capable of being mounted in the housing (1) from that side of the housing (1) which faces away from the rotary slide (6), **characterized in that** the housing (1) has at least one abutment (14) which can be brought into engagement with a first positioning projection (13) assigned to the seal (7) for the twist-proof and axially stop-defined reception of the latter.

2. Regulating valve according to Claim 1, **characterized in that** the rotary slide (6) is of hollow-cylindrical design and is arranged concentrically within the essentially cylindrical valve chamber (2).

3. Regulating valve according to either one of Claims 1 and 2, **characterized in that** the housing (1) is of hollow-cylindrical design and has at least one second positioning projection (9) on its side facing away from the valve chamber (2).

4. Regulating valve according to Claim 3, **characterized in that** the second positioning projection (9) is produced in one piece and materially integrally with the housing (1).

5. Regulating valve according to one of Claims 1 to 4, **characterized in that** the seal (7) comprises a sealing lip (10) which is designed to be closed on itself and, as a consequence of production, has a shape adapted to that surface (8) of the rotary slide (6) which is to be sealed off.

6. Regulating valve according to Claim 5, **characterized in that** the sealing lip (10) is connected to a supporting body (12) consisting of tough material by means of a sealing body (11) consisting of elastomeric material.

7. Regulating valve according to either one of Claims 5 and 6, **characterized in that** the sealing lip (10) consists of PTFE.

8. Regulating valve according to one of Claims 5 to 7, **characterized in that** the sealing lip (10) is formed by a film-like thin coating of the sealing body (11) on the side facing the rotary slide (6).

9. Regulating valve according to Claim 6, **characterized in that** the supporting body has at least the first positioning projection (13).

10. Regulating valve according to Claim 9, **characterized in that** the abutment (14) is formed by the boundary of a recess (15) of the housing (1), the said recess being designed essentially congruently with respect to the first positioning projection (13).

11. Regulating valve according to one of Claims 1 to 10, **characterized in that** the seal (7) has, on the outer circumference, a sealing bead (16) which is subjected to static stress and which can be laid sealingly under elastic prestress against that wall of the housing (1) which circumferentially delimits the inflow (3) and/or the outflow (4).

12. Regulating valve according to one of Claims 5 to 11, **characterized in that** the sealing lip (10), as seen in the longitudinal section of the seal (7), is widened conically in the direction of the space (17) having the relatively higher pressure.

13. Seal (7) for sealing off the outer circumferential surface (8) of a rotary slide (6) which is arranged rotatably about an axis (5) in a valve chamber (2) of a housing (1), the seal (7) comprising a supporting body (12) consisting of tough material and a sealing body (11), the sealing body (11) having a sealing lip (10) on the side facing the surface of the rotary slide (6) in the mounted state of the seal, and the supporting body (12) having at least one first positioning projection (13) which can be brought into engagement with an abutment (14) of the housing (1), **characterized in that** the first positioning projection (13) is designed as a twist-preventing device and as an axial stop for positioning the seal (7) in the housing (1).

14. Liquid cooling system of an internal combustion engine, comprising a regulating valve according to one of Claims 1 to 12, and/or a seal (7) according to Claim 13.

## Revendications

1. Soupape de régulation, comprenant un boîtier (1) avec une chambre de soupape (2), la chambre de soupape (2) présentant au moins une entrée (3) et au moins une sortie (4), l'entrée (3) et/ou la sortie (4) pouvant être fermées au besoin au moins partiellement par un robinet tournant (6) pouvant tourner autour d'un axe (5) et disposé dans la chambre de soupape (2), l'entrée (3) et/ou la sortie (4) étant entourées du côté du boîtier (1) tourné vers le robinet tournant (6) par un joint d'étanchéité (7), le joint d'étanchéité (7) pouvant être appliqué de manière étanche sous précontrainte élastique contre la surface (8) du robinet tournant (6) tournée vers le boîtier (1) et le joint d'étanchéité (7) pouvant être monté par le côté du boîtier (1) opposé au robinet tournant (6) dans le boîtier (1), **caractérisée en ce que** le boîtier (1) présente au moins une butée (14) qui peut être amenée en engagement avec une première saillie de positionnement (13) associée au joint d'étanchéité (7) en vue de sa réception fixée en rotation et définie par la butée dans la direction axiale.

2. Soupape de régulation selon la revendication 1, **caractérisée en ce que** le robinet tournant (6) est réalisé sous forme de cylindre creux et est disposé concentriquement à l'intérieur de la chambre de soupape (2) de forme essentiellement cylindrique.

3. Soupape de régulation selon l'une quelconque des revendications 1 ou 2, **caractérisée en ce que** le boîtier (1) est réalisé sous forme de cylindre creux et présente, sur son côté opposé à la chambre de soupape (2), au moins une deuxième saillie de positionnement (9).

4. Soupape de régulation selon la revendication 3, **caractérisée en ce que** la deuxième saillie de positionnement (9) est réalisée d'une seule pièce et venue de matière avec le boîtier (1).

5. Soupape de régulation selon l'une quelconque des revendications 1 à 4, **caractérisée en ce que** le joint d'étanchéité (7) comprend une lèvre d'étanchéité (10) qui est réalisée de manière fermée en soi et qui présente, du fait de sa fabrication, une forme adaptée à la surface (8) à étanchéifier du robinet tournant (6).

6. Soupape de régulation selon la revendication 5, **caractérisée en ce que** la lèvre d'étanchéité (10) est raccordée au moyen d'un corps d'étanchéité (11) en matériau élastomère à un corps de support (12) en matériau rigide.

7. Soupape de régulation selon l'une quelconque des revendications 5 ou 6, **caractérisée en ce que** la lèvre d'étanchéité (10) se compose de PTFE.

8. Soupape de régulation selon l'une quelconque des revendications 5 à 7, **caractérisée en ce que** la lèvre d'étanchéité (10) est formée par un revêtement mince de type feuille du corps d'étanchéité (11) sur le côté tourné vers le robinet tournant (6).

9. Soupape de régulation selon la revendication 6, **caractérisée en ce que** le corps de support présente au moins la première saillie de positionnement (13).

10. Soupape de régulation selon la revendication 9, **caractérisée en ce que** la butée (14) est formée par la limitation d'un évidement (15) du boîtier (1) réalisé de manière essentiellement coïncidant avec la première saillie de positionnement (13).

11. Soupape de régulation selon l'une quelconque des revendications 1 à 10, **caractérisée en ce que** le joint d'étanchéité (7) présente du côté de la périphérie extérieure un bourrelet d'étanchéité (16) sollicité statiquement, qui peut être appliqué hermétiquement, sous précontrainte élastique, contre la paroi du boîtier (1) limitant du côté périphérique l'entrée (3) et/ou la sortie (4).

12. Soupape de régulation selon l'une quelconque des revendications 5 à 11, **caractérisée en ce que** la lèvre d'étanchéité (10), considérée en coupe longitudinale du joint d'étanchéité (7), est élargie coniquement dans la direction de l'espace (17) avec la pression relativement plus élevée.

13. Joint d'étanchéité (7) pour étanchéifier la surface (8) du côté de la périphérie extérieure d'un robinet tournant (6), qui est disposé de manière à pouvoir tourner autour d'un axe (5) dans une chambre de soupape (2) d'un boîtier (1), le joint d'étanchéité (7) comprenant un corps de support (12) en matériau rigide et un corps d'étanchéité (11), le corps d'étanchéité (11) présentant une lèvre d'étanchéité (10) du côté tourné, dans l'état de montage du joint d'étanchéité, vers la surface du robinet tournant (6), et le corps de support (12) présentant au moins une première saillie de positionnement (13) qui peut être amenée en engagement avec une butée (14) du boîtier (1), **caractérisé en ce que** la première saillie de positionnement (13) est réalisée sous forme de fixation contre la rotation et sous forme de butée axiale pour le positionnement du joint d'étanchéité (7) dans le boîtier (1).

14. Système de refroidissement à liquide d'un moteur à combustion interne, comprenant une soupape de régulation selon l'une quelconque des revendications 1 à 12 et/ou un joint d'étanchéité (7) selon la revendication 13.
